# EUROPEAN PATENT SPECIFICATION

(11) **EP 3 783 429 B1**
(45) Date of publication and mention of the grant of the patent: **22.06.2022**
(21) Application number: 19192829.0
(22) Date of filing: 21.08.2019
(51) Int. Cl.: G03B 30/00

(54) **METHOD AND APPARATUS FOR ASSEMBLING A CAMERA MODULE FOR A MOTOR VEHICLE**
VERFAHREN UND VORRICHTUNG ZUR ERSTELLUNG EINES KAMERAMODULS FÜR EIN KRAFTFAHRZEUG
PROCÉDÉ ET APPAREIL D'ASSEMBLAGE D'UN MODULE DE CAMÉRA POUR UN VÉHICULE À MOTEUR

(43) Date of publication of application: 24.02.2021
(73) Proprietor: Veoneer Sweden AB, 447 83 Vårgårda (SE)
(72) Inventor: WIGREN, Roger, 58337 Linköping (SE); KNUTSSON, Per, 58331 Linköping (SE); KÄLLMAN, Elin, 58330 Linköping (SE)
(74) Representative: Müller Verweyen

(56) References cited:
- EP-A1- 3 121 886
- EP-A1- 3 438 721
- CN-A- 109 491 179
- US-A1- 2007 159 703

## Description

The invention relates to a method of assembling a camera module for a motor vehicle, comprising providing a lens unit forming a lens objective, providing a back unit carrying an image sensor, applying UV curable glue to the lens unit and/or to the back unit, positioning the lens unit and the back unit relative to each other, and curing the glue using at least one UV radiation source while holding the lens unit and the back unit in a relative position and orientation in order to form a glue joint between the lens unit and the back unit. The invention also relates to an apparatus for assembling a camera module for a motor vehicle.

Such method and apparatus are known from EP 2 942 937 A1.

DE 10 2010 047 106 A1 and WO 2011/131164 A1 respectively disclose a camera system where the lens objective is fixed relative to the image sensor by a glue joint between the lens objective and the lens holder.

UV curable glue is predominantly used in the alignment of lens objectives to image sensor parts in the volume production of fixed focus camera modules for automotive vision systems. UV exposure at constant level for a predetermined amount of time can result in changes of the intended curing result, causing larger spread and lower yield in key parameter performance. However, if a UV light sensor is used to monitor the UV exposure, it would obstruct some of the light which is intended for the curing process. Such a sensor would also measure the light only locally and not cover the complete area of interest. In the context of volume production for the automotive industry, there is a need to reduce the cycle time.

The problem underlying the present invention is to provide a method of assembling a camera in volume production with low cycle time, constant curing results according to the specifications, and high yield in key parameter performance.

The invention solves this objective with the features of the independent claims.

According to the invention, during the glue curing, the at least one UV radiation source is controlled using feedback provided by the image sensor of the camera module. Because of the curing, the glue becomes less transparent. This can be measured by the image sensor of the camera module which, surprisingly, is sensitive to UV radiation to some extent. In this manner, the curing process can be controlled until the glue has reached a proper level of opaqueness, as determined by the feedback signal from the image sensor. Excessive UV illumination times can be avoided and the cycle time can be reduced.

By utilizing the optical sensor in the camera module itself as a UV light intensity sensor, it is possible to monitor the UV intensity during the curing phase without blocking the optical path from the UV light sources. By assuring that the required UV cure strength is obtained, the cycle time can be optimized and the throughput can be increased.

In embodiments of the invention, a weighted measurement of the complete sensitive area of the image sensor is performed. For example, a peripheral region of the image sensor, being arranged closer to the UV light sources, may be weighted higher in said evaluation than a central area of the image sensor.

In the case of a plurality of UV light sources, the sensitive area of the image sensor is preferably evaluated in a plurality of areas, where each area corresponds to one or more of a plurality of UV light sources and/or to a particular section of the glue, as opposed to evaluating the sensitive area of the image sensor as a whole. In this embodiment, each UV light source can be individually controlled based on a feedback signal from the corresponding area of the image sensor, which allows a more refined, or sectioned, control of the UV sources and/or the UV adhesive.

Preferably, a time-resolved measurement of UV radiation captured by the image sensor is performed. A time-resolved measurement during the UV exposure period allows to monitor the gradual curing of the glue as the UV intensity measured by the image sensor gradually reduces when the glue becomes less transparent due to the curing process.

For a proper setup of the exposure equipment, the method is preferably used to measure light intensity from different UV sources, to balance the power and exposure from each UV source individually. This is preferably done by powering each UV source separately in sequence while capturing an image for each UV source exposure.

Preferably, a dark image is captured with UV sources turned off, which can be used for background light subtraction to enhance the sensitivity of the measurement by the image sensor.

The invention is particularly useful in an active alignment procedure comprising the steps of providing a lens unit, applying glue to the lens unit and/or to the back unit, positioning the lens unit and the back unit relative to each other, taking reference images, changing the position and/or orientation of the lens unit relative to the back unit until the relative position and/or orientation becomes optimal, and curing the glue while holding the lens unit and the back unit in the optimal relative position and orientation.

During this active alignment, the yaw and pitch, or tip and tilt, of the lens objective is advantageously adjusted such that the image plane of the lens objective coincides with the image sensor. This implies that the lens objective is rotated around the two tip-tilt rotational degrees of freedom. The magnitude of these rotations is recorded by an alignment device. Furthermore, the x-y-position of the image in the sensitive plane of the image sensor is adjusted by moving the lens unit with the lens objective in x and y direction, such that the camera module will be looking straight once mounted into an external housing and the bore sight error is minimized. Due to the active alignment in the x and y directions the bore sight of each camera module is inherently well-defined, such that no additional bore sight adjustment between two camera modules is required for stereo systems.

Furthermore, during the above active alignment the rotational or roll error of an object as seen by the image sensor is advantageously recorded by an alignment device. This recording is translated into a rotation of the lens unit itself, such that the image sensor is aligned to external features of the lens unit. These external features of the lens holder unit be used to mate the camera module into an external camera housing part.

An aspect of the invention relates to an apparatus for assembling a camera module for a motor vehicle, comprising a manipulator adapted to hold a lens unit forming a lens objective and a back unit carrying an image sensor in a relative position and orientation, providing a glue dispenser adapted to apply UV curable glue to the lens unit and/or to the back unit, at least one UV radiation source adapted to illuminate the glue while the lens unit and the back unit are held in a relative position and orientation, in order to form a glue joint between the lens unit and the back unit. According to the invention, during said glue illumination, said at least one UV radiation source is controlled by an electronic control device using a feedback signal provided by the image sensor of the camera module.

As described above, the invention is particularly useful for providing a feedback loop in production to secure curing stability. Other fields of use are possible, for example to optimize the glue bead amount and/or position by comparison of Δt; to compare different glue types UV-curing characteristics; to compare assembling apparatus setups by comparison of Δt.

In the following the invention shall be illustrated on the basis of preferred embodiments with reference to the accompanying drawings, wherein:
- Fig. 1: illustrates an assembling procedure of a camera unit using a lens unit;
- Fig. 2: shows a cross-sectional view of an assembling apparatus for assembling a camera module;
- Fig. 3: shows a top view of an assembling apparatus for assembling a camera module; and
- Fig. 4: shows a perspective view of a back unit.

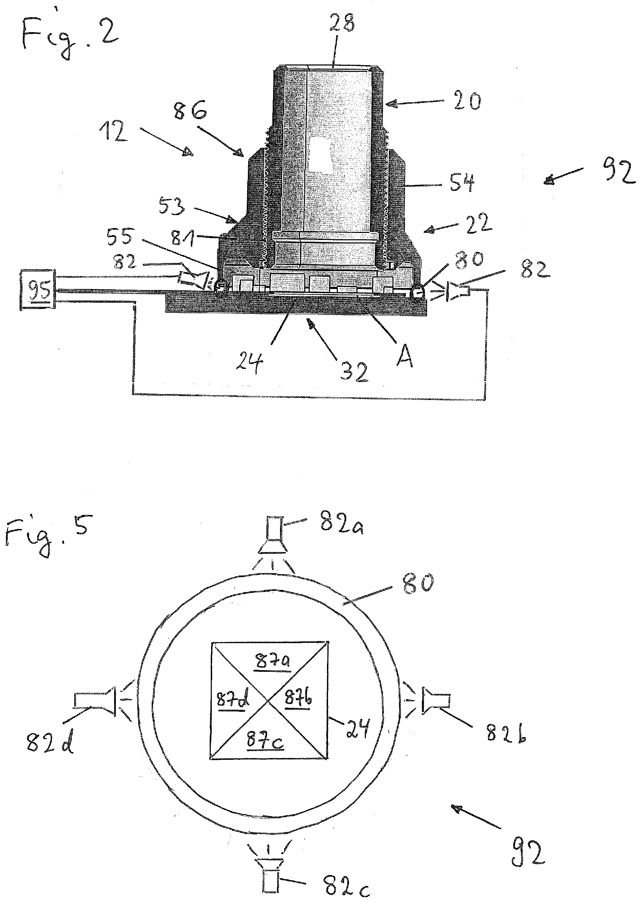

In a preferred embodiment a camera module 12 (see Figure 2) for a vision system of a motor vehicle comprises a lens objective 20, a lens holder 53 holding the lens objective 20, an image sensor 24 and a back plate 32 holding the image sensor 24. The lens objective 20 is pre-mounted to the lens holder 53 to form a lens unit 86. The image sensor 24 and the printed circuit board 83 are mounted to the back plate 32 to form a back unit 90.

The lens unit 86, here the lens holder 53, is connected to the back unit 90, here the back plate 32, by means of a glue joint 80 which may be overall ring-shaped, or for example be composed of a plurality of glue dots. The glue 80 is a UV curable glue. The lens holder 53, the back plate 32 and the glue joint 80 form a housing 22 which, together with the lens objective 20, is basically closed in a light tight manner except for an incident light opening 28. With respect to thermal stability, the lens holder 53 is preferably made of metal, for example Zinc alloy. The lens objective 20 comprises one or more optical lenses held inside the lens objective 20.

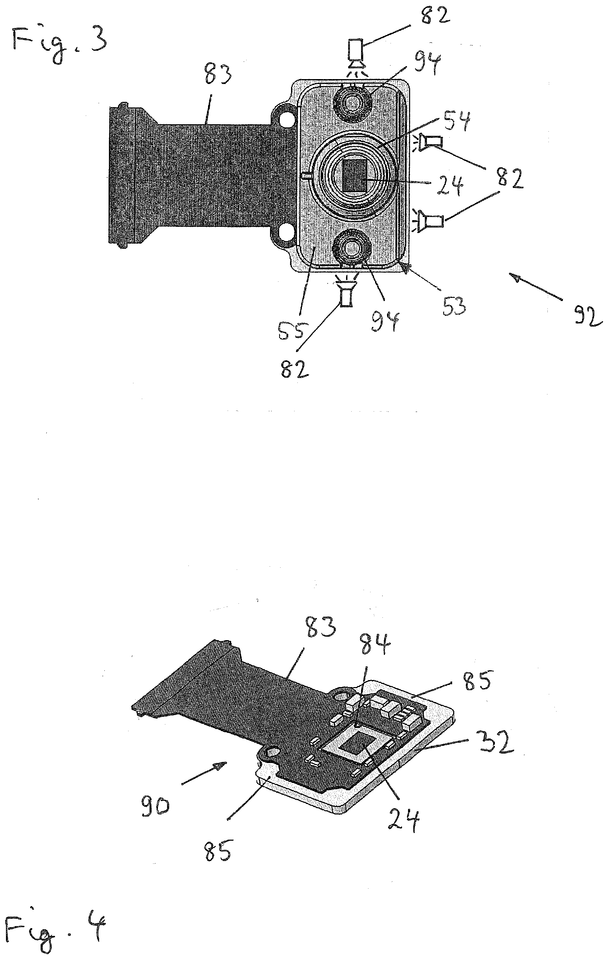

The lens holder 53 comprises a tubular part 54 which is preferably cylindrical and extends parallel to the optical axis of the lens objective 20, and a base part 55 to connect the lens holder 53 to the back plate 32 by the glue joint 80. The tubular part 54 of the lens holder 53 and the lens objective 20 are arranged concentrically to the optical axis of the lens objective 20. The lens holder 53 preferably comprises external features 94 or position defining means (see Figure 3), which may be provided on the upper side of the base part 55 of the lens holder 53, through which the camera module 12 can be fastened with fixed orientation to an external part not shown in the Figures.

The lens objective 20 is coaxially held in the tubular part 54 of the lens holder 53. The lens objective 20 may be screwed into the lens holder 53. The connection between the lens objective 20 and the lens holder 54 may be fixed by glue 81.

Incident light falls through the opening 28 and is focussed by the lens objective 20 in the image plane A of the lens objective 20. The sensitive plane of the image sensor 24 is advantageously disposed at or in the image plane of the lens objective 20. The image sensor 24 is preferably a two-dimensional image sensor, in particular an optical sensor having maximum sensitivity in the visible wavelength region, and is adapted to convert incident light into an electrical signal containing image information. The image sensor 24 may for example be a CCD sensor or a CMOS sensor.

The rigid back plate 32 is preferably made of metal, in particular steel. The printed circuit board 83 is preferably a flexible printed circuit board arranged on the sensor side of the back plate 32. The printed circuit board 83 has an inner opening 84 to be placed around the image sensor 24 as may be seen in Figure 4. Furthermore, the printed circuit board 83 is preferably smaller than the back plate 32 to leave one or more blank areas 85, for example margins, of the back plate 32 where it is not covered by the PCB 83, such that the lens holder 53 can be directly attached to the back plate 32 in the region of the blank areas 85 by the glue joint 80. In the embodiment shown in Figure 3, the blank areas 85 are formed by margins along three edges of the back plate 32, such that an overall U-shaped blank area 85 is formed. The blank areas 85 may also be formed by through-holes in the PCB 83, for example.

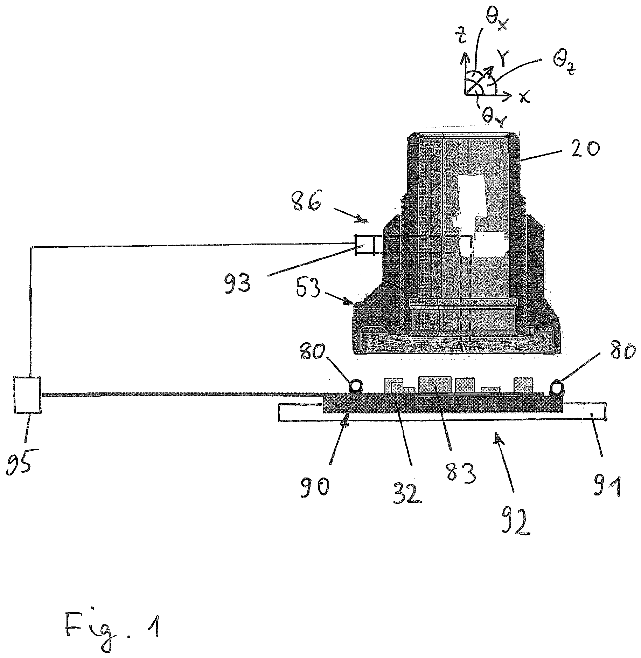

The assembling procedure of the camera module 12 is explained in the following with reference to Figures 1 and 2.

The mounted back unit 90 is placed for example on a holder 91 of an assembling apparatus 92. In particular, the assembling apparatus 92 may comprise a carrousel and the holder 91 may be rotatable. In a first rotation position of the holder 91, the lens unit 86 and the back unit 90 are loaded into the assembling apparatus 92. Also indexing may be performed here. Next, for example in a second rotation position of the holder 91, UV-curable glue 80 is dispended onto the blank area 85 on the sensor side of the base plate 32, or alternatively to the bottom side of the lens holder 53, by a glue dispenser not shown in the Figures.

An active alignment procedure of the relative position of the lens unit 86 and the back unit 90 is then performed, for example in a third rotational position of the holder 91. A manipulator 93, which may for example engage in the position defining elements 94 (see Figure 3), is controllable by a electronic control device 95, which is only schematically shown in Figure 1, to adjust the position of the lens holder 53 or lens unit 86 relative to the position of the back plate 32 or back unit 90 along six degrees of freedom, namely in x-y-direction perpendicular to the optical z-axis for bore sight correction, tip-tilt angle Θₓ, Θ_{y} adjustment, focus adjustment along the optical z-axis, and, with respect to stereo applications of the camera module 12, roll angle Θ_{z} adjustment.

In the active alignment procedure, reference images of a reference object not shown in Figure 1 are continuously taken by the image sensor 24 while moving the lens unit 86 relative to the back unit 90 along the optical z-axis and/or changing the tip and tilt angles Θₓ, Θ_{y}. In every relative position of the lens unit 86 and the back unit 90, the image quality is evaluated by the electronic control device 95 and the evaluated image quality is used as feedback for controlling the manipulator 93 in order to adjust the lens objective 20.

The x-y position of the lens unit 86 relative to the back unit 90 is adjusted such that the bore sight error is minimal. Due to this adjustment, a generally non-zero offset between the optical z-axis and the geometrical centre of the image sensor 24 is provided, such that the optical z-axis is generally not centered on the sensitive surface of the image sensor 24.

The roll angle Θ_{z} is adjusted such that an image taken by the image sensor 24 has a pre-determined roll alignment relative to the lens holder 53. For example, the lines and rows of the images could be aligned to be parallel to the edges of the lens holder 53, without limitation to this particular alignment.

The procedure described so far is an active alignment procedure as described in EP 2 942 937 A1, allowing five or six degrees of freedom for the alignment to be optimized.

When the image quality determined by the image sensor 24 has become optimal and the x-y position and the roll angle Θ_{z} have been properly adjusted, the glue 80 is cured by applying UV radiation while holding the lens unit 86 and the back unit 90 in the optimal relative position. This is explained in the following with reference to Figure 2.

The assembling apparatus 92 comprises at least one UV light source 82, preferably a plurality of UV light sources 82 (or UV sources for short) circumferentially arranged around the glue 80 and directed towards the glue, such that UV light emitted by the one or more UV sources 82 cures the glue 80. As an example, six UV sources may be used as indicated in Figure 3 (where two UV sources at the left side are not visible), or four UV sources 82 as in Figure 5, while any other number of UV light sources 82 may be possible.

Operation of the one or more UV sources 82 is controlled by the electronic control device 95. According to the invention, a signal from the image sensor 24 within the camera module 12, being sensitive to UV light for some extent, is used as a feedback signal for controlling the operation of the one or more UV sources 82. For example, the UV source 82 is kept on as long as the image sensor 24 measures the change (intensity reduction) of the UV radiation to be above a predefined threshold, but the UV source 82 is shut off if the image sensor 24 measures the change (intensity reduction) of the UV radiation to be below a predefined threshold.

A practical flowchart for a glue curing process could be as follows:
a) Record intensity I on the image sensor 24 at the start of the UV illumination by the UV source(s) 82; subtract background level (dark image).
b) Continue illuminating glue 80 by UV source(s) 82 for a time period Δt.
c) Record intensity I' on the image sensor 24 by the UV source(s) 82; subtract background level (dark image).
d) If I'/I is below a predefined threshold, shut off UV illumination by UV source(s) 82; otherwise, go to step b).

Another practical flowchart for a glue curing process could be as follows:
a) Record intensity I on the image sensor 24 at the start of the UV illumination by the UV source(s) 82.
b) Continue illuminating glue 80 by UV source(s) 82 for a time period Δt.
c) Record intensity I' on the image sensor 24 by the UV source(s) 82.
d) If I-I' is above a predefined threshold, shut off UV illumination by UV source(s) 82; otherwise, go to step b).

When the glue 80 is cured, the completely mounted camera unit 20 as shown in Figure 2 can be applied to a mono imaging means as well as to a stereo imaging means without any further adjustment, in particular without roll angle adjustment since the roll angle Θ_{z} is inherently adjusted in the camera module 12 as described above. Also the bore sight of each camera module 12 is inherently well-defined, such that no additional bore sight adjustment between two camera modules 12 is required for stereo systems. In this manner, a universally usable camera module 12 or camera eye is provided.

A preferred embodiment employing a plurality of UV sources 82, here for example four UV sources 82a, 82b, 82c, 82d, is shown in Figure 5. In such embodiment, the sensitive area of the imaging device is preferably divided into a number of areas 87a, 87b, 87c, 87d, where each of the areas 87a, 87b, 87c, 87d corresponds to a particular UV source 82a, 82b, 82c, 82d. In particular, to each UV source (e.g. 82a) the most proximate area (e.g. 87a) is assigned. In such embodiments, the UV illumination by each UV source 82a, 82b, 82c, 82d using a feedback signal from the corresponding area 87a, 87b, 87c, 87d on the imaging device 24. In this manner, a more refined, or sectioned, control of the UV sources 82a, 82b, 82c, 82d and/or the UV curable adhesive 80 is achieved.

In Figure the image sensor 24 is split into n discrete parts, where n may be the number of UV light sources available (here 4). In another embodiment, n separate weight maps may be used. In a weight map, each pixel has an associated weight. In this embodiment, a weighted measurement is performed separately for each UV source 82a, 82b, 82c, 82d based on the corresponding weight map. In the above embodiment, overlapping areas are possible for the UV sources 82a, 82b, 82c, 82d.

In the embodiment shown in the figures, the lens holder 53 and the lens objective 20 are separate parts, together forming the lens unit 86. Other embodiments of the lens unit 86 are possible. In particular, the lens unit 86 may be formed by the lens objective 20, i.e., the one or more lenses are directly integrated into the lens holder to form a uniform lens unit 86, such that a separate lens holder 53 is not necessary (so-called unibody embodiment). In other words, the lens objective 20 can be the identical to the lens unit 86, where the cylindrical casing of the lens objective 20 could form the lens holder. In the unibody embodiment, the glue joint 80 is provided between the lens objective 20 / the lens unit 86 and the back unit 90.

Similarly, in the embodiment shown in the figures, the back plate 32 and the PCB 83 are separate parts, together forming the back unit 90. Other embodiments of the back unit 90 are possible. In particular, the back unit 90 may be formed by a rigid PCB 83, such that a separate back plate 32 is not necessary. In other words, the PCB 83 with mounted image sensor 24 can be the identical to the back unit 90.

## Claims

1. A method of assembling a camera module (12) for a motor vehicle, comprising providing a lens unit (86) forming a lens objective (20), providing a back unit (90) carrying an image sensor (24), applying UV curable glue (80) to the lens unit (86) and/or to the back unit (90), positioning the lens unit (86) and the back unit (90) relative to each other, and curing the glue (80) using at least one UV radiation source (82) while holding the lens unit (86) and the back unit (90) in a relative position and orientation in order to form a glue joint (80) between the lens unit (86) and the back unit (90), **characterized in that** during said glue curing, said at least one UV radiation source (82) is controlled using a feedback signal provided by the image sensor (24) of the camera module (12).

2. The method as claimed in claim 1, **characterized in that** the UV source (82) is kept on as long as the image sensor (24) measures that the change of the UV radiation is above a predefined threshold, whereas the UV source (82) is shut off when the image sensor (24) measures that the change of the UV radiation is below a predefined threshold.

3. The method as claimed in any one of the preceding claims, **characterized in that** a weighted measurement of the complete sensitive area of the image sensor (24) is performed.

4. The method as claimed in any one of the preceding claims, **characterized in that** the sensitive area of the image sensor (24) is evaluated in a plurality of areas (87a-87d), where each area (87a-87d) corresponds to one or more of a plurality of UV light sources (82a-82d) and/or to a particular section of the glue (80), wherein each UV light source (82a-82d) is individually controlled based on a feedback signal from the corresponding area (87a-87d) of the image sensor (24).

5. The method as claimed in any one of the preceding claims, **characterized in that** a time-resolved measurement of UV radiation captured by the image sensor (24) is performed.

6. The method as claimed in any one of the preceding claims, **characterized by** the following procedure:
a) record intensity I on the image sensor (24) at the start of the UV illumination by the UV source (82), subtract background level or dark image;
b) continue illuminating glue (80) by UV source (82) for a time period Δt;
c) record intensity I' on the image sensor (24) by the UV source (82), subtract background level or dark image;
d) if I'/I is below a predefined threshold, shut off UV illumination by UV source (82), otherwise, go to step b).

7. The method as claimed in any one of claims 1 to 5, **characterized by** the following procedure:
a) record intensity I on the image sensor (24) at the start of the UV illumination by the UV source (82);
b) continue illuminating glue (80) by UV source (82) for a time period Δt;
c) record intensity I' on the image sensor (24) by the UV source (82);
d) if I-I' is above a predefined threshold, shut off UV illumination by UV source (82), otherwise, go to step b).

8. An apparatus (92) for assembling a camera module (12) for a motor vehicle, comprising a manipulator (93) adapted to hold a lens unit (86) forming a lens objective (20), and a back unit (90) carrying an image sensor (24) in a relative position and orientation providing, a glue dispenser adapted to apply UV curable glue (80) to the lens unit (86) and/or to the back unit (90), at least one UV radiation source (82) adapted to illuminate the glue (80) while the lens unit (86) and the back unit (90) are held in a relative position and orientation, in order to form a glue joint (80) between the lens unit (86) and the back unit (90), **characterized in that** during said glue illumination, said at least one UV radiation source (82) is controlled by an electronic control device (95) using a feedback signal provided by the image sensor (24) of the camera module (12).

## Patentansprüche

1. Ein Verfahren zum Montieren eines Kameramoduls (12) für ein Kraftfahrzeug, wobei das Verfahren das Bereitstellen einer Linseneinheit (86), die ein Linsenobjektiv (20) bildet, das Bereitstellen einer rückwärtigen Einheit (90), die einen Bildsensor (24) trägt, das Auftragen eines UV-härtbaren Klebstoffs (80) auf die Linseneinheit (86) und/oder auf die rückwärtige Einheit (90), das Positionieren der Linseneinheit (86) und der rückwärtigen Einheit (90) relativ zueinander und das Härten des Klebstoffs (80) unter Verwendung wenigstens einer UV-Strahlungsquelle (82), während die Linseneinheit (86) und die rückwärtige Einheit (90) in einer relativen Position und Orientierung gehalten werden, um zwischen der Linseneinheit (86) und der rückwärtigen Einheit (90) eine Klebeverbindung (80) zu bilden, umfasst, **dadurch gekennzeichnet, dass** die wenigstens eine UV-Strahlungsquelle (82) während des Härtens des Klebstoffs unter Verwendung eines Rückkopplungssignals geregelt wird, das durch den Bildsensor (24) des Kameramoduls (12) bereitgestellt wird.

2. Das Verfahren nach Anspruch 1, **dadurch gekennzeichnet, dass** die UV-Quelle (82) eingeschaltet gehalten wird, solange der Bildsensor (24) misst, dass die Änderung der UV-Strahlung über einem im Voraus definierten Schwellenwert liegt, während die UV-Quelle (82) ausgeschaltet wird, wenn der Bildsensor (24) misst, dass die Änderung der UV-Strahlung unter einem im Voraus definierten Schwellenwert liegt.

3. Das Verfahren nach einem der vorhergehenden Ansprüche, **dadurch gekennzeichnet, dass** eine gewichtete Messung des vollständigen empfindlichen Bereichs des Bildsensors (24) ausgeführt wird.

4. Das Verfahren nach einem der vorhergehenden Ansprüche, **dadurch gekennzeichnet, dass** der empfindliche Bereich des Bildsensors (24) in mehreren Bereichen (87a-87d) bewertet wird, wobei jeder Bereich (87a-87d) einer oder mehreren von mehreren UV-Lichtquellen (82a-82d) und/oder einem bestimmten Abschnitt des Klebstoffs (80) entspricht, wobei jede UV-Lichtquelle (82a-82d) auf der Grundlage eines Rückkopplungssignals von einem entsprechenden Bereich (87a-87d) des Bildsensors (24) einzeln geregelt wird.

5. Das Verfahren nach einem der vorhergehenden Ansprüche, **dadurch gekennzeichnet, dass** eine zeitaufgelöste Messung der durch den Bildsensor (24) erfassten UV-Strahlung ausgeführt wird.

6. Das Verfahren nach einem der vorhergehenden Ansprüche, **gekennzeichnet durch** die folgende Prozedur:
a) Aufzeichnen der Intensität I auf dem Bildsensor (24) zu Beginn der UV-Bestrahlung durch die UV-Quelle (82), Subtrahieren des Hintergrundpegels oder dunklen Bilds;
b) weiteres Bestrahlen des Klebstoffs (80) durch die UV-Quelle (82) während einer Zeitdauer Δt;
c) Aufzeichnen der Intensität I' auf dem Bildsensor (24) durch die UV-Quelle (82), Subtrahieren des Hintergrundpegels oder dunklen Bilds;
d) Abschalten der UV-Bestrahlung durch die UV-Quelle (82), falls I'/I unter einem im Voraus definierten Schwellenwert liegt, andernfalls Gehen zu Schritt b).

7. Das Verfahren nach einem der Ansprüche 1 bis 5, **gekennzeichnet durch** die folgende Prozedur:
a) Aufzeichnen der Intensität I auf dem Bildsensor (24) zu Beginn der UV-Bestrahlung durch die UV-Quelle (82);
b) weiteres Bestrahlen des Klebstoffs (80) durch die UV-Quelle (82) während einer Zeitdauer Δt;
c) Aufzeichnen der Intensität I' auf dem Bildsensor (24) durch die UV-Quelle (82);
d) Abschalten der UV-Bestrahlung durch die UV-Quelle (82), falls I-I' über einem im Voraus definierten Schwellenwert liegt, andernfalls Gehen zu Schritt b).

8. Eine Vorrichtung (92) zum Montieren eines Kameramoduls (12) für ein Kraftfahrzeug, wobei die Vorrichtung einen Manipulator (93), der dafür ausgelegt ist, eine Linseneinheit (86), die ein Linsenobjektiv (20) bildet, und eine rückwärtige Einheit (90), die einen Bildsensor (24) trägt, in einer relativen Position und Orientierung zu halten, einen Klebstoffspender, der dafür ausgelegt ist, einen UV-härtbaren Klebstoff (80) auf die Linseneinheit (86) und/oder auf die rückwärtige Einheit (90) aufzutragen, wenigstens eine UV-Strahlungsquelle (82), die dafür ausgelegt ist, den Klebstoff (80) zu bestrahlen, während die Linseneinheit (86) und die rückwärtige Einheit (90) in einer relativen Position und Orientierung gehalten werden, um zwischen der Linseneinheit (86) und der rückwärtigen Einheit (90) eine Klebeverbindung (80) zu bilden, umfasst, **dadurch gekennzeichnet, dass** die wenigstens eine UV-Strahlungsquelle (82) während der Klebstoffbestrahlung durch eine elektronische Regeleinrichtung (95) unter Verwendung eine Rückkopplungssignals, das durch den Bildsensor (24) des Kameramoduls (12) bereitgestellt wird, geregelt wird.

## Revendications

1. Un procédé d'assemblage d'un module de caméra (12) pour un véhicule à moteur, comprenant la fourniture d'une unité de lentille (86) formant un objectif à lentille (20), la fourniture d'une unité arrière (90) portant un capteur d'image (24), l'application d'une colle durcissable aux UV (80) à l'unité de lentille (86) et/ou à l'unité arrière (90), le positionnement de l'unité de lentille (86) et de l'unité arrière (90) l'une par rapport à l'autre, et le durcissement de la colle (80) à l'aide d'au moins une source de rayonnement UV (82) tout en maintenant l'unité de lentille (86) et l'unité arrière (90) dans une position et une orientation relatives afin de former un joint de colle (80) entre l'unité de lentille (86) et l'unité arrière (90), **caractérisé en ce que**, pendant ledit durcissement de colle, ladite au moins une source de rayonnement UV (82) est commandée à l'aide d'un signal de rétroaction fourni par le capteur d'image (24) du module de caméra (12).

2. Le procédé selon la revendication 1, **caractérisé en ce que** la source d'UV (82) est laissée allumée tant que le capteur d'image (24) mesure que le changement du rayonnement UV est au-dessus d'un seuil prédéfini, tandis que la source d'UV (82) est coupée lorsque le capteur d'image (24) mesure que le changement du rayonnement UV est en dessous d'un seuil prédéfini.

3. Le procédé selon l'une quelconque des revendications précédentes, **caractérisé en ce qu'**une mesure pondérée de la zone sensible complète du capteur d'image (24) est effectuée.

4. Le procédé selon l'une quelconque des revendications précédentes, **caractérisé en ce que** la zone sensible du capteur d'image (24) est évaluée dans une pluralité de zones (87a à 87d), où chaque zone (87a à 87d) correspond à une ou plusieurs d'une pluralité de sources de lumière UV (82a à 82d) et/ou à une section particulière de la colle (80), dans lequel chaque source de lumière UV (82a à 82d) est commandée individuellement d'après un signal de rétroaction provenant de la zone (87a à 87d) correspondante du capteur d'image (24).

5. Le procédé selon l'une quelconque des revendications précédentes, **caractérisé en ce qu'**une mesure à résolution temporelle d'un rayonnement UV capturé par le capteur d'image (24) est effectuée.

6. Le procédé selon l'une quelconque des revendications précédentes, **caractérisé par** la procédure suivante :
a) enregistrer une intensité I sur le capteur d'image (24) au début de l'illumination UV par la source d'UV (82), soustraire un niveau de fond ou une image sombre ;
b) continuer d'illuminer la colle (80) par la source d'UV (82) pendant une période Δt;
c) enregistrer une intensité I' sur le capteur d'image (24) par la source d'UV (82), soustraire un niveau de fond ou une image sombre ;
d) si I'/I est en dessous d'un seuil prédéfini, couper l'illumination UV par la source d'UV (82), sinon, passer à l'étape b).

7. Le procédé selon l'une quelconque des revendications 1 à 5, **caractérisé par** la procédure suivante :
a) enregistrer une intensité I sur le capteur d'image (24) au début de l'illumination UV par la source d'UV (82) ;
b) continuer d'illuminer la colle (80) par la source d'UV (82) pendant une période Δt;
c) enregistrer une intensité I' sur le capteur d'image (24) par la source d'UV (82);
d) si I - I' est au-dessus d'un seuil prédéfini, couper l'illumination UV par la source d'UV (82), sinon, passer à l'étape b).

8. Un appareil (92) d'assemblage d'un module de caméra (12) pour un véhicule à moteur, comprenant un manipulateur (93) adapté pour maintenir une unité de lentille (86) formant un objectif à lentille (20), et une unité arrière (90) portant un capteur d'image (24) dans une position et une orientation relatives, fournissant un distributeur de colle adapté pour appliquer une colle durcissable aux UV (80) à l'unité de lentille (86) et/ou à l'unité arrière (90), au moins une source de rayonnement UV (82) adaptée pour illuminer la colle (80) tandis que l'unité de lentille (86) et l'unité arrière (90) sont maintenues dans une position et une orientation relatives, afin de former un joint de colle (80) entre l'unité de lentille (86) et l'unité arrière (90), **caractérisé en ce que**, pendant ladite illumination de colle, ladite au moins une source de rayonnement UV (82) est commandée par un dispositif de commande électronique (95) à l'aide d'un signal de rétroaction fourni par le capteur d'image (24) du module de caméra (12).
